# EUROPÄISCHE PATENTSCHRIFT

(11) **EP 3 305 602 B1**
(45) Veröffentlichungstag und Bekanntmachung des Hinweises auf die Patenterteilung: **29.05.2019**
(21) Anmeldenummer: 17195059.5
(22) Anmeldetag: 05.10.2017
(51) Int. Cl.: B60R 11/02

(54) **MOBILTELEFONABLAGE ZUR VERWAHRUNG EINES SMARTPHONES SOWIE FAHRZEUG**
MOBILE TELEPHONE STORAGE FOR STORING A SMARTPHONE AND VEHICLE
PORTE-TÉLÉPHONE PORTABLE PERMETTANT DE PORTER UN SMARTPHONE AINSI QUE VÉHICULE

(30) Priorität: 07.10.2016 DE 102016119109
(43) Veröffentlichungstag der Anmeldung: 11.04.2018
(73) Patentinhaber: Minda KTSN Plastic Solution GmbH & Co. KG, 01796 Pirna (DE)
(72) Erfinder: Keller, Paul, 01796 Pirna (DE); Muschick, Micha, 01796 Pirna (DE)
(74) Vertreter: Weidner Stern Jeschke

(56) Entgegenhaltungen:
- EP-A1- 2 209 289
- DE-A1-102006 036 031
- FR-A1- 3 047 701
- US-A- 5 996 866

## Beschreibung

Die Erfindung betrifft eine Mobiltelefonablage zum sicheren Verwahren eines Smartphones mit einer beweglichen Mobiltelefonaufnahme und einem Ablagegehäuse sowie ein Fahrzeug.

In modernen Fahrzeugen dient insbesondere das Smartphone des Fahrers als wichtiges Kommunikationsmittel. Über dieses Smartphone kann sowohl ein Notruf abgesetzt als auch während der Fahrt kommuniziert werden. Auch besteht der Wunsch für die Beifahrer, gegebenenfalls einzelne Softwaregeräte, sogenannte Apps, während der Fahrt zu verwenden. Häufig ist es so, dass das Mobilfunktelefon weiterhin von der Person am Körper getragen oder an Kleidungsstücken verwahrt wird. Alternativ wird das Mobilfunktelefon in einem Ablagefach lose verstaut oder von außen sichtbar abgelegt.

Insbesondere für den Fall, dass es zu einem Verkehrsunfall kommt, könnten die Beschleunigungskräfte dafür sorgen, dass nicht nur das Fahrzeug, sondern auch das Mobilfunktelefon beschädigt oder entsprechend das Mobilfunktelefon einen Mitfahrer durch herumfliegen verletzt werden.

In der GB 2 407 448 A ist ein Halter zur Montage in einem Armaturenbrett eines Fahrzeuges offenbart, wobei der Halter ein Gehäuse und eine Trägereinheit mit einer Ablage zur Aufnahme eines horizontal liegenden Handys aufweist und die Trägereinheit mittels eines Push-Push-Mechanismus in dem Gehäuse einrastet.

Die DE 201 18 300 U1 beschreibt eine Konsoleneinrichtung mit einem ausfahrbaren Staufach, in welches ein Mobiltelefon mittels einrastbarer Schlitten horizontal liegend eingebracht wird.

Die US 5,996,866 A offenbart ein bewegliches, schräggestelltes Schubfach, in dem ein Mobiltelefon eingeklemmt wird und welches zwischen einer Schließstellung zum Verbergen des Mobiltelefons in einem Schlitz innerhalb der Konsole und einer Öffnungsstellung zum Freilegen des Mobiltelefons beweglich ist.

Die DE 10 2011 053 607 A1 beschreibt einen in einer Fläche versenkbaren Halter für ein elektronisches Gerät, bei dem das Gerät zwischen mindestens zwei Klemmschienen eingeklemmt wird und ein Polster dazu dient, das Mobiltelefon im Halter rückseitig zu stützen.

In der DE 2014 008 810 A1 ist eine induktive Ladevorrichtung für ein mobiles Endgerät offenbart, wobei das Endgerät senkrecht in die Ladevorrichtung eingebracht wird und zum Laden mittels eines Halteelementes eine auf das Endgerät wirkende Haltekraft erzeugt wird, sodass das Endgerät direkt an der induktiven Ladeeinheit anliegt.

Die DE 10 2009 031 123 A1 beschreibt ein Kraftfahrzeug mit einer Aufnahmevorrichtung für ein Mobilgerät, wobei die bildgebende Einheit des Mobilgerätes freiliegt und die Aufnahmeeinrichtung derart zu einer reflektierenden Ebene angeordnet ist, dass ein Bild der bildgebenden Einheit über die reflektierende Ebene für einen Kraftfahrzeugnutzer sichtbar wird.

In der DE 10 2005 021 105 ist eine Haltevorrichtung mit einer Rahmeneinrichtung beschrieben, in welcher ein Mobiltelefon einfügbar ist und von der Rahmeneinrichtung vollständig umgeben wird. Des Weiteren wird ein Kombiinstrument mit einer Spiegeleinrichtung zur Anzeige für das Mobiltelefon offenbart.

Die DE 20 2006 007 723 U1 offenbart eine eingebaute Handy-Freisprecheinrichtung mit einem Telefonschlitz, in dem das Handy horizontal liegend lösbar montiert ist.

In der DE 10 2008 025 639 A1 wird ein Mobiltelefon horizontal auf einer Führung in den Schacht einer Halterung geschoben, wobei das Display in den Schacht aufgenommen wird und die Tastatur aus dem Schacht herausragt.

Aus der gattungsbildenden EP 2 209 289 A1 ist ein Halter für ein tragbares elektronisches Gerät bekannt, bei dem das Gerät in seiner Längsrichtung vertikal zur Längsrichtung des Trägers eingebracht und mittels teilweise über das Display des Gerätes greifende Klemmblöcke in seiner Position fixiert wird.

Zudem ist nachteilig bei bekannten Mobilfunktelefonablagen, dass üblicherweise die Seite mit der Kontaktbuchse des Mobiltelefons als erste in eine Halterung ("base end first") eingebracht wird und gleichzeitig mit dem Einbringen der elektrische Kontakt hergestellt wird. Dies führt zu einer Belastung der entsprechenden Buchse und/oder Steckers. Dementsprechend tritt bei einer horizontalen Position des Mobiltelefons in der Ablage im Crash-Fall aufgrund der gleichen Ausrichtung des Mobiltelefons und der Fahrtrichtung eine hohe Belastung an der Kontaktbuchse und/oder -steckers und gegebenenfalls ein Bruch an der Buchse und/oder des Steckers und/oder ihrer Kontaktierung auf.

Aufgabe der Erfindung ist es, den Stand der Technik zu verbessern.

Gelöst wird die Aufgabe durch eine Vorrichtung gemäß Anspruch 1 und insbesondere durch eine Mobiltelefonablage zum sicheren Verwahren eines Mobiltelefons mit einer beweglichen Mobiltelefonaufnahme, einen Ablagegehäuse und einer Push-Push-Mechanik, welche die bewegliche Mobiltelefonaufnahme mit dem Ablagegehäuse verbindet, sodass bei einem ersten Betätigen der Mobiltelefonaufnahme die Mobiltelefonaufnahme eine Schließstellung und bei einem anschließenden Betätigen die Mobiltelefonaufnahme eine Offenstellung einnimmt und die bewegliche Mobiltelefonaufnahme ein gefedertes Seitenelement, welches insbesondere zu einem eingeführten Mobiltelefon konisch ausgestaltet ist, aufweist, sodass die Mobiltelefonaufnahme Dickenunterschiede ausgleicht und eine feste Positionierung realisiert.

Ein Kern der Erfindung beruht darauf, das Mobiltelefon an einem sicheren Ort zu verstauen und ein einfaches und sicheres Verwahren zu gewährleisten. Weiterhin vorteilhaft bei dieser Ausgestaltung ist, dass das Mobiltelefon geschützt ist und auch im Falle eines Unfalls weiterhin einsatzfähig ist. So kann gegebenenfalls nach dem Unfall über eine Freisprechanlage Hilfe angefordert werden.

Die Grundidee beruht auf einer sogenannten Push-Push-Mechanik, wie diese beispielsweise auch in Kugelschreibern eingesetzt wird. Diese Push-Push-Mechanik arretiert das Mobiltelefon bei einem ersten Hineindrücken und löst es anschließend nach einem weiteren (Hinein-)Drücken in dieselbe Richtung wieder aus dieser Position heraus.

Insbesondere verbindet die Push-Push-Mechanik das Ablagegehäuse mit der beweglichen auf das Mobiltelefon angepassten Mobiltelefonaufnahme. Durch das Betätigen der Push-Push-Mechanik wird dabei jeweils die Mobiltelefonaufnahme im Bezug zum Ablagegehäuse bewegt.

Folgendes Begriffliche sei erläutert.

Eine "Mobiltelefonablage" (synonym Mobilfunktelefonablage) ist ein Ort, an dem ein Mobiltelefongerät sicher verwahrt und abgelegt werden kann. Dabei ist die Mobiltelefonablage im Allgemeinen räumlich begrenzt, wobei im Normalfall das Mobiltelefon die Mobiltelefonablage nicht verlässt. Zudem ist die Mobiltelefonablage auf die Ausmaße des entsprechenden Mobiltelefons ausgelegt oder die Mobiltelefonablage ist derart ausgestaltet, dass übliche Mobiltelefone von der Mobiltelefonablage aufgenommen werden können.

Ein "Mobiltelefon" (synonym zu Mobilfunktelefon) ist ein mobiles Handgerät mit dem eine Kommunikation realisierbar ist. Beispielsweise kann ein derartiges Mobiltelefon einen Mobilfunkstandard bedienen wie beispielsweise 3G, GSM oder LTE. Auch sogenannte Smartphones, welche im Allgemeinen zusätzlich eine Verbindung mit dem Internet etablieren können, sind von dem Begriff Mobiltelefon umfasst.

Die "Mobiltelefonaufnahme" (synonym Mobilfunktelefonaufnahme) umfasst insbesondere den Teil der Mobiltelefonablage, welcher beim Einschieben des Mobiltelefons direkt in einem mechanischen Kontakt zu dem Mobiltelefon steht.

Das "Ablagegehäuse" bildet eine räumliche Begrenzung, sodass in einem eingeschobenen Zustand und in einem verbauten Zustand in einem Fahrzeug das Mobiltelefon optisch verschwunden ist. Zudem dient das Ablagegehäuse zur Aufnahme der Mobiltelefonaufnahme.

Bezüglich der "Push-Push-Mechanik" wird auf die vorherigen Ausführungen verwiesen.

Bei der "Schließstellung" ist das Mobiltelefon sicher innerhalb des Ablagegehäuses und somit der Mobiltelefonaufnahme "verstaut". Dabei ist insbesondere das Mobiltelefon im Wesentlichen ortsfest fixiert, sodass im normalen Fahrbetrieb eine etwaige Geräuschentwicklung oder dergleichen ausgeschlossen ist.

In der "Offenstellung" kann ein Mobiltelefon aus der Mobiltelefonablage entnommen oder in diese eingebracht werden.

Das "gefederte Seitenelement" bietet insbesondere eine ortsfixierte Positionierung. Das gefederte Seitenelement kann dabei beispielsweise durch eine Leiste realisiert werden, welche mittels einer Spiralfeder mit der Mobiltelefonaufnahme und/oder dem Ablagegehäuse verbunden ist. Beispielsweise kann auch das gefederte Seitenelement als wellige Leiste realisiert sein. Wesentlich dabei ist, dass bei unterschiedlichen Dicken von Mobiltelefonen jeweils das Mobiltelefon in der Schließstellung mit dem gefederten Seitenelement einen mechanischen Kontakt ausbildet, sodass die federnde Wirkung und somit eine gewisse Arretierungswirkung gegeben ist, dabei ist die "Dicke" des Mobiltelefons insbesondere die örtliche Ausdehnung orthogonal zur Bildschirmfläche des Mobiltelefons. Anstatt des Begriffes Dicke wird häufig auch der Begriff der Tiefe verwendet, wobei die Dicke oder entsprechend die Tiefe im Allgemeinen deutlich geringere Ausmaße als die Länge oder Breite des Mobiltelefons aufweist.

Die "Dickenunterschiede" können sowohl unterschiedliche Dicken eines Mobiltelefons ausgleichen oder auch die unterschiedlichen Tiefen von unterschiedlichen Mobiltelefonen. Durch die konische Ausgestaltung ist eine einfache Realisierung gegeben, aber auch die Realisierung mittels einer welligen Leiste, welche insbesondere unterschiedliche Wellenberghöhen und -tiefen aufweist, kann einen Ausgleich der Dickenunterschiede bewirken.

Die "feste Positionierung" kann auch als definierte Positionierung oder auch als Arretierung bezeichnet werden. Wesentlich dabei ist, dass unter normalen Fahrbedingungen des Fahrzeugs ein Verrutschen des Mobiltelefons und damit einhergehende Geräuschentwicklung oder dergleichen ausgeschlossen ist.

In einer weiteren Ausführungsform weist die Mobiltelefonablage eine Abfederungseinrichtung mit einem ersten Federelement auf, welches derart angeordnet ist, dass in einem Crashfall in einer ersten Beschleunigungsrichtung das Federelement abfedernd auf das Mobiltelefon wirkt, sodass nach einem Crashfall das Mobiltelefon funktionsfähig ist.

Durch die Verwendung des ersten Federelements kann eine Aufprallkraft, welche im Crashfall auf das Mobiltelefon wirkt soweit vermindert werden, dass die Funktionsfähigkeit des Mobiltelefons (vorliegend auch teilweise Mobilfunktelefon genannt) bestehen bleibt.

Dabei kann das Federelement wiederum als wellige Leiste oder gefederte Leiste oder auch als Schaumstoff ausgestaltet werden. Auch eine Umsetzung mittels Gumminoppen oder eines flexiblen Kunststoffs ist realisierbar.

Die "erste Beschleunigungsrichtung" kann beispielsweise die Fahrtrichtung sein. In diesem Fall wird das Federelement an der Mobiltelefonaufnahme oder dem Ablagegehäuse in Fahrtrichtung angeordnet.

Ein "Crashfall" liegt insbesondere dann vor, wenn derart hohe Beschleunigungskräfte auf das Fahrzeug wirken, dass die Integrität des Fahrzeugs nicht gewährleistet werden kann. Insbesondere ist ein Crashfall gegeben, wenn das Fahrzeug verunfallt.

Um auch bei Heckunfällen oder auch bei Drehungen des Fahrzeugs die Funktionsfähigkeit des Mobiltelefons zu gewährleisten, kann die Abfederungseinrichtung ein zweites Federelement, ein drittes Federelement, ein viertes Federelement oder weitere Federelemente aufweisen, wobei die Federelemente derart angeordnet sind, dass die Federelemente jeweils in unterschiedlichen Beschleunigungsrichtungen im Crashfall abfedernd auf das Mobiltelefon wirken.

Die Beschleunigungsrichtungen können dabei entgegen der Fahrtrichtung oder auch orthogonal zur Fahrtrichtung liegen.

In einer weiteren Ausführungsform ist das Mobiltelefon vertikal mit einem ersten mechanischen Kontakt von einer Seitenfläche des Mobiltelefons frei von einem elektrischen Kontakt zu der beweglichen Mobiltelefonaufnahme in die Mobiltelefonablage einbringbar. Dies kann auch unabhängig des Vorhandenseins des gefederten Seitenelements erfolgen.

Es sei angemerkt, dass unter "vertikal" insbesondere verstanden wird, wenn die sich durch Länge und Breite des Mobiltelefons bildende Fläche parallel zur Gravitationsrichtung eingeschoben wird.

Dadurch, dass das Mobiltelefon vertikal stehend, insbesondere vertikal auf einer Seitenlängsfläche stehend, in die bewegliche Mobiltelefonaufnahme eingebracht und mittels der Push-Push-Mechanik durch das Hereindrücken fixiert wird, ist das Mobiltelefon geringeren Belastungen durch Veränderung der Fahrdynamik ausgesetzt.

Es ist besonders vorteilhaft, das ein erster Kontakt des Mobiltelefons lediglich mechanisch in der Mobiltelefonablage erfolgt und nicht zeitgleich ein elektrischer Kontakt bei Hereindrücken stattfindet, da durch das häufige Hereindrücken ein langfristiger Verschleiß und/oder durch zu starkes Drücken eine Beschädigung des elektrischen Kontaktes auftreten können.

Zudem sind durch das vertikale Einbringen des Mobiltelefons in die Mobiltelefonablage die elektrischen Kontakte (Buchse und/oder Stecker) derart ausrichtbar, dass eine elektrische Kontaktierung nicht in Fahrtrichtung ausgerichtet ist, so dass eine Belastung auf die elektrischen Kontakte und/oder die Kontaktierung, insbesondere bei einem schlagartigen Abbremsen oder bei einem Unfall, vermindert ist.

In einer weiteren Ausführungsform weist das Ablagegehäuse oder die bewegliche Mobiltelefonaufnahme eine elektronische Konnektierungseinrichtung auf, sodass eine Energiezufuhr zu dem Mobiltelefon und/oder ein Datenaustausch mit dem Mobiltelefon realisierbar ist.

Eine derartige "elektronische Konnektierungseinrichtung" kann beispielsweise ein Versorgungskabel mit einem USB-Anschluss oder dergleichen umfassen.

Über die elektronische Konnektierungseinrichtung, welche beispielsweise ein USB-Anschluss ist, kann beispielsweise das Mobiltelefon mit Strom geladen werden oder das Mobiltelefon mit der Fahrzeugelektronik Daten austauschen. So kann beispielsweise darüber eine Datenübertragung oder beispielsweise ein Telefongespräch realisiert werden.

Mit einer Bildschirmspiegelungseinrichtung kann der Bildschirm des Smartphones/Mobiltelefons auf Displays oder Monitore im Fahrzeug übertragen werden. Dies ermöglicht bestimmte Inhalte, welche auf dem Mobiltelefon angezeigt werden, den Insassen des Fahrzeugs zur Verfügung zu stellen.

Über die Mobilbedieneinrichtung werden beispielsweise einzelne über den Bildschirm des Mobiltelefons aktivierbare Elemente angesteuert. So kann beispielsweise die Steuerung eines Bedieners auf einem Display oder Monitor im Fahrzeug direkt den Bildschirm des Mobiltelefons aufgeprägt werden.

Insbesondere wenn es sich bei der Bildschirmoberfläche um einen oberflächenkapazitiven Touchscreen handelt, weist die Mobilbedieneinrichtung matrixähnliche beschaltbare Leitungselemente auf, sodass Einzelbereiche des Bildschirms des Mobiltelefons ansteuerbar sind.

Vorliegend ist die Mobiltelefonablage insbesondere vorteilhaft, da die Bildschirmspiegelungseinrichtung und/oder die Mobilfunkbedieneinrichtung definiert im Bezug zum Mobiltelefon positionierbar sind.

Um die Mobiltelefonanlage optimal in unterschiedlichen Fahrzeugen oder entsprechend in unterschiedlichen Fahrzeugausführungen einbinden zu können, ist eine Blende vorgesehen. Diese Blende kann beispielsweise mittels Klickkontakt und entsprechenden Einrastelementen im Bezug zur Mobiltelefonablage und insbesondere zum Ablagegehäuse verortet werden.

Auch kann die Blende eine Mobilfunktelefonzuführung aufweisen, über welche das Mobiltelefon der Mobiltelefonaufnahme zuführbar ist.

Insbesondere für den Fall eines Fahrzeugüberschlags und des damit einhergehenden Sicherstellens, dass das Mobiltelefon die Mobiltelefonablage nicht verlässt, weist die Blende einen Beschleunigungsverschluss auf.

Ein derartiger "Beschleunigungsverschluss" kann beispielsweise mittel Schwerkraftpendel realisiert sein. Derartige Schwerkraftpendel werden beispielsweise bei Sicherheitsgurten in Automobilen eingesetzt, deren Funktionsweise vorliegend auf die Blende übertragbar sind.

Durch die Adapteraufnahme können Mobiltelefone unterschiedlicher Größen und Ausmaße jeweils für die Mobiltelefonaufnahme angepasst werden.

Weiterhin wird die Aufgabe gelöst durch ein Fahrzeug gemäß Anspruch 11.

Im Weiteren wird die Erfindung anhand eines Ausführungsbeispiels näher erläutert. Es zeigen
- Figur 1: eine schematische und teiltransparente Darstellung einer erfindungsgemäßen Handyablage mit einem eingebrachten Smartphone sowie eine vergrößerte Darstellung der Push-Push-Mechanik,
- Figur 2: die Handyablage in einer stark schematischen Darstellung in einer geschnittenen Seitenansicht mit einer Blende und
- Figur 3: eine Blendenabdeckung mit einem Zufuhrschlitz und Borsten.

Eine Handyablage 101 weist ein Gehäuse 105, eine bewegliche Handyaufnahme 103 sowie eine Push-Push-Mechanik 104 auf. Zudem ist die bewegliche Handyaufnahme 103 über eine Feder 117 mit dem Gehäuse 105 verbunden. Zudem ist das Gehäuse 105 über Klickverbindungen 110 mit einer Blende 109 mechanisch kontaktiert.

Im oberen Bereich der Blende 109 ist eine Abdeckung 111 mit Borsten 113 und einem Zufuhrschlitz 115 angeordnet. In einem Bereich der Handyablage 101 ist eine gefederte konische Leiste (nicht dargestellt) angeordnet, wobei die gefederte konische Leiste in einer Schließstellung mit einer Rückseite eines Smartphones in einem mechanischen Kontakt steht.

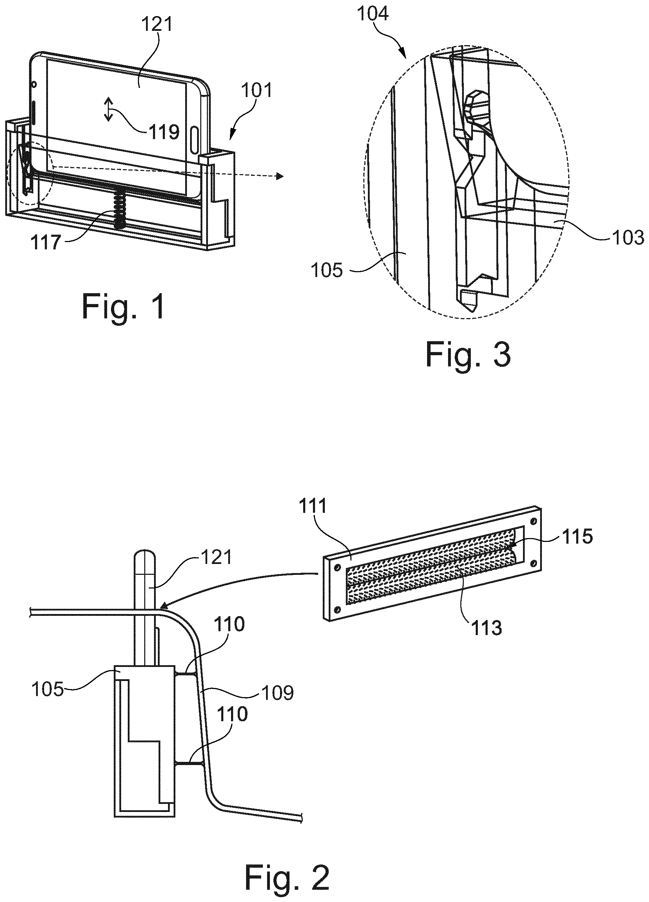

Wird nun ein Smartphone 121 in die Handyablage 101 vertikal auf einer Seitenfläche stehend eingeführt, so ist das Smartphone 121 in Bewegungsrichtung 119 durch Drücken und Loslassen durch einen Bediener verschiebbar. Wird das Smartphone 121 eingeführt und in Richtung Gehäuse 105 eingedrückt, so wird die Feder 117 zusammengepresst und die Push-Push-Mechanik 104 in eine Arretierstellung (siehe Ausschnitt in Figur 1) verschoben. Zugleich presst die gefederte konische Leiste auf die Rückseite des Smartphones 121 und arretiert das Smartphone.

Durch ein erneutes Drücken in Richtung Gehäuse 105 wird die Arretierstellung der Push-Push-Mechanik 104 gelöst und das Smartphone 121 wieder freigegeben. Durch die Borsten 113 wird insbesondere ein Verschmutzen des Gehäuses 105 sowie der beweglichen Handyaufnahme 103 verhindert. Alternativ wird statt der Abdeckung 111 ein Deckel mit Klappmechanismus verwendet, welcher in der Schließstellung geschlossen ist, sodass das Smartphone 121 nicht sichtbar ist. In dieser Alternativen weist der Deckel ein Schwerkraftpendel auf, welches den Deckel bei entsprechenden Beschleunigungskräften verschließt.

### Bezugszeichenliste

- 101: Handyablage
- 103: bewegliche Handyaufnahme
- 104: Push-Push-Mechanik
- 105: Gehäuse
- 109: Blende
- 110: Klickverbindung
- 111: Abdeckung
- 113: Borsten
- 115: Zufuhrschlitz
- 117: Feder
- 119: Bewegungsrichtung
- 121: Smartphone

## Patentansprüche

1. Mobiltelefonablage (101) zum sicheren Verwahren eines Mobiltelefons (121) mit einer beweglichen Mobiltelefonaufnahme (103), einem Ablagegehäuse (105) und einer Push-Push-Mechanik (104), welche die bewegliche Mobiltelefonaufnahme mit dem Ablagegehäuse verbindet, sodass bei einem ersten Betätigen der Mobiltelefonaufnahme die Mobiltelefonaufnahme eine Schließstellung und bei einem anschließenden Betätigen die Mobiltelefonaufnahme eine Offenstellung einnimmt, wobei die bewegliche Mobiltelefonaufnahme ein gefedertes Seitenelement, welches insbesondere zu einem eingeführten Mobiltelefon konisch ausgestaltet ist, aufweist, sodass die Mobiltelefonaufnahme Dickenunterschiede ausgleicht und eine feste Positionierung realisiert, und dem Ablagegehäuse eine Blende (109) zugeordnet ist, sodass die Mobiltelefonablage für einen Bediener zumindest teilweise durch die Blende verdeckt ist, **dadurch gekennzeichnet, dass** die Blende einen Beschleunigungsverschluss aufweist, sodass in einem Crashfall, insbesondere bei einem Überschlag, das Mobiltelefon in der Mobiltelefonaufnahme verbleibt.

2. Mobiltelefonablage nach Anspruch 1, **gekennzeichnet durch** eine Abfederungseinrichtung mit einem ersten Federelement, welches derart angeordnet ist, dass in einem Crashfall in einer ersten Beschleunigungsrichtung das Federelement abfedernd auf das Mobiltelefon wirkt, sodass nach einem Crashfall das Mobiltelefon funktionsfähig ist.

3. Mobiltelefonablage nach Anspruch 2, **dadurch gekennzeichnet, dass** die Abfederungseinrichtung ein zweites Federelement, ein drittes Federelement, ein viertes Federelement oder weitere Federelemente aufweist, wobei die Federelemente derart angeordnet sind, dass die Federelemente jeweils in unterschiedlichen Beschleunigungsrichtungen im Crashfall abfedernd auf das Mobiltelefon wirken.

4. Mobiltelefonablage nach einem der Ansprüche 2 oder 3, **dadurch gekennzeichnet, dass** das Federelement eine wellige Leiste, eine gefederte Leiste und/oder ein elastischer Kunststoff ist.

5. Mobiltelefonablage nach einem der vorherigen Ansprüche, **dadurch gekennzeichnet, dass** das Mobiltelefon vertikal mit einem ersten mechanischen Kontakt von einer Seitenfläche des Mobiltelefons frei von einem elektrischen Kontakt zu der beweglichen Mobiltelefonaufnahme in die Mobiltelefonablage einbringbar ist.

6. Mobiltelefonablage nach einem der vorherigen Ansprüche, **dadurch gekennzeichnet, dass** das Ablagegehäuse oder die bewegliche Mobiltelefonaufnahme eine elektronische Konnektierungseinrichtung aufweist, sodass eine Energiezufuhr zu dem Mobiltelefon und/oder ein Datenaustausch mit dem Mobiltelefon realisierbar ist.

7. Mobiltelefonablage nach einem der vorherigen Ansprüche, **dadurch gekennzeichnet, dass** die bewegliche Mobiltelefonaufnahme und/oder das Ablagegehäuse eine Bildschirmspiegelungseinrichtung und/oder eine Mobilfunkbedieneinrichtung aufweist, sodass das in der festen Positionierung das Mobiltelefon über ein externes Terminal bedienbar ist.

8. Mobiltelefonablage nach einem der vorherigen Ansprüche, **dadurch gekennzeichnet, dass** die Blende eine Mobiltelefonzuführung (111) aufweist, über welche das Mobiltelefon der Mobiltelefonaufnahme zuführbar ist.

9. Mobiltelefonablage nach einem der vorherigen Ansprüche, **dadurch gekennzeichnet, dass** die Mobilfunktelefonzuführung einen Klappdeckel oder Borsten (113) aufweist, sodass die Mobiltelefonablage vor Verschmutzung gesichert ist.

10. Mobiltelefonablage nach einem der vorherigen Ansprüche, **dadurch gekennzeichnet, dass** die Push-Push-Mechanik eine Herzkurvenmechanik aufweist.

11. Mobiltelefonablage nach einem der vorherigen Ansprüche, **gekennzeichnet durch** eine Adapteraufnahme, welche in die Mobiltelefonaufnahme funktionell einbringbar ist, sodass die Mobiltelefonablage für unterschiedlichste Mobiltelefone anpassbar ist.

12. Fahrzeug, insbesondere Auto oder Lastkraftwagen, **dadurch gekennzeichnet, dass** das Fahrzeug eine Mobiltelefonablage nach einem der vorherigen Ansprüche aufweist.

## Claims

1. A cell phone holder (101) for securely storing a cell phone (121) with a movable cell phone holding fixture (103), a holder housing (105) and a push-push mechanism (104), which connects the movable cell phone holding fixture with the holder housing, so that when the cell phone holding fixture is first actuated, the cell phone holding fixture enters a closed position, and when the cell phone holding fixture is subsequently actuated again, the cell phone holding fixture enters an opened position, wherein the movable cell phone holding fixture comprises a spring-loaded side element, which is designed in particular so as to be conical toward an inserted cell phone, so that the cell phone holding fixture compensates for differences in thickness and implements a secure positioning, and a cover (109) is attached to the holder housing, so that for a user the cell phone holding fixture is covered at least partially by the cover, **characterized in that** the cover comprises an acceleration locking device, so that in case of a crash, in particular in case of a rollover, the cell phone remains in the cell phone holding fixture.

2. The cell phone holder according to claim 1, **characterized by** a spring system with a first spring element, which is disposed in such a manner that in case of a crash in a first acceleration direction, the spring element acts on the cell phone in a cushioning manner, so that the cell phone is functional after the crash.

3. The cell phone holder according to claim 2, **characterized in that** the spring system comprises a second spring element, a third spring element, a fourth spring element or other spring elements, wherein the spring elements are disposed in such a manner that in case of a crash, the spring elements respectively act on the cell phone in different acceleration directions in a cushioning manner.

4. The cell phone holder according to one of the claims 2 or 3, **characterized in that** the spring element is a corrugated strip, a spring-loaded strip and/or an elastic synthetic material.

5. The cell phone holder according to one of the afore-mentioned claims, **characterized in that** the cell phone can be vertically introduced with a first mechanical contact into the cell phone holder from a lateral surface of the cell phone without an electrical contact toward the movable cell phone holding fixture.

6. The cell phone holder according to one of the afore-mentioned claims, **characterized in that** the holder housing or the movable cell phone holding fixture comprises an electronic connection device, so that an energy supply of the cell phone and/or a data exchange with the cell phone can be implemented.

7. The cell phone holder according to one of the afore-mentioned claims, **characterized in that** the movable cell phone holding fixture and/or the holder housing comprise a display mirroring device and/or a cell phone operating device, so that in its fixed position, the cell phone can be operated by way of an external terminal.

8. The cell phone holder according to one of the afore-mentioned claims, **characterized in that** the cover comprises a cell phone feeding system (111) by way of which the cell phone can be fed into the cell phone holding fixture.

9. The cell phone holder according to one of the afore-mentioned claims, **characterized in that** the cell phone feeding system comprises a hinged lid or bristles (113), so that the cell phone holder is protected from dirt.

10. The cell phone holder according to one of the afore-mentioned claims, **characterized in that** the push-push mechanism comprises a cardioid mechanism.

11. The cell phone holder according to one of the afore-mentioned claims, **characterized by** an adapter fixture, which can be functionally introduced into the cell phone holding fixture, so that the cell phone holder can be adapted to different cell phone.

12. A vehicle, in particular a car or a truck, **characterized in that** the vehicle comprises a cell phone holder according to one of the afore-mentioned claims.

## Revendications

1. Support de téléphone portable (101) pour ranger de manière sûre un téléphone portable (121) avec un logement mobile (103) de téléphone portable, un boîtier de support (105) et un mécanisme push-push (104) qui relie le logement de téléphone portable avec le boîtier de support, de sorte que lors d'un premier actionnement du logement de téléphone portable, le logement de téléphone portable adopte une position fermée et lors d'un actionnement ultérieur, le logement de téléphone portable adopte une position ouverte, où le logement mobile de téléphone portable comporte un élément latéral à ressort de forme conique en particulier en direction d'un téléphone portable inséré, de sorte que le logement de téléphone portable compense des différences d'épaisseur et réalise un positionnement fixe, et un cache (109) est associé au boîtier de support, de sorte que, pour un utilisateur, le support de téléphone portable est au moins partiellement recouvert par le cache, **caractérisé en ce que** le cache comporte un verrouillage en cas d'accélération, de sorte qu'en cas d'accident, en particulier en cas de tonneau, le téléphone portable reste dans le logement de téléphone portable.

2. Support de téléphone portable selon la revendication 1, **caractérisé par** un système de ressorts avec un premier élément ressort qui est disposé de telle manière qu'en cas d'accident dans une première direction d'accélération, l'élément ressort agit de manière amortissante sur le téléphone portable, de sorte que le téléphone portable est en état de fonctionnement après l'accident.

3. Support de téléphone portable selon la revendication 2, **caractérisé en ce que** le système de ressorts comporte un second élément ressort, un troisième élément ressort, un quatrième élément ressort ou un élément ressort supplémentaire, où les éléments ressorts sont disposés de telle manière qu'en cas d'accident, les éléments ressorts agissent respectivement dans des directions d'accélération différentes de manière amortissante sur le téléphone portable.

4. Support de téléphone portable selon l'une des revendications 2 ou 3, **caractérisé en ce que** l'élément ressort est une lame ondulée, une lame à ressorts et/ou une matière plastique élastique.

5. Support de téléphone portable selon l'une des revendications précédentes, **caractérisé en ce que** le téléphone portable est insérable verticalement dans le support de téléphone portable, avec un premier contact mécanique, d'un côté latéral du téléphone portable sans contact électrique en direction du logement mobile de téléphone portable.

6. Support de téléphone portable selon l'une des revendications précédentes, **caractérisé en ce que** le boîtier de support ou le logement mobile de téléphone portable comporte un dispositif de connexion électronique, de sorte qu'une alimentation électrique du téléphone portable et/ou un échange de données avec le téléphone portable est réalisable.

7. Support de téléphone portable selon l'une des revendications précédentes, **caractérisé en ce que** le logement mobile de téléphone portable et/ou le boîtier de support comporte un dispositif de recopie d'écran et/ou un dispositif de commande de téléphonie mobile, de sorte que le téléphone portable est utilisable depuis un terminal externe dans sa position fixe.

8. Support de téléphone portable selon l'une des revendications précédentes, **caractérisé en ce que** le cache comporte un système d'amenée du téléphone portable (111), par lequel le téléphone portable peut être amené dans le logement de téléphone portable.

9. Support de téléphone portable selon l'une des revendications précédentes, **caractérisé en ce que** le système d'amenée du téléphone portable comporte un couvercle à charnière ou des poils de brosse (113), de sorte que le support de téléphone portable est protégé contre l'encrassement.

10. Support de téléphone portable selon l'une des revendications précédentes, **caractérisé en ce que** le mécanisme push-push comporte un mécanisme cardioïde.

11. Support de téléphone portable selon l'une des revendications précédentes, **caractérisé par** un logement d'adaptateur qui peut être inséré de manière fonctionnelle dans le logement de téléphone portable, de sorte que le support de téléphone portable peut être adapté à différents types de téléphones portables.

12. Véhicule, en particulier voiture ou camion, **caractérisé en ce que** le véhicule comporte un support de téléphone portable selon l'une des revendications précédentes.
